# EUROPÄISCHE PATENTANMELDUNG

(11) **EP 3 301 523 A1**
(43) Veröffentlichungstag der Anmeldung: **04.04.2018**
(21) Anmeldenummer: 16191778.6
(22) Anmeldetag: 30.09.2016
(51) Int. Cl.: G05B 19/05, G05B 19/418, H04L 12/40, G08C 17/02

(54) **REDUNDANT BETREIBBARES KOMMUNIKATIONSSYSTEM FÜR EIN INDUSTRIELLES AUTOMATISIERUNGSSYSTEM UND VERFAHREN ZU DESSEN BETRIEB**

(71) Anmelder: Siemens Aktiengesellschaft, 80333 München (DE)
(72) Erfinder: Angst, Hermann, 76199 Karlsruhe (DE); Müller, Jörg, 76351 Linkenheim (DE)

(57) **Zusammenfassung**

Ein redundant betreibbares Kommunikationssystem für ein industrielles Automatisierungssystem umfasst zumindest ein erstes und zweites Kommunikationsgerät sowie zumindest 4 Netzinfrastrukturgeräte. Das erste Kommunikationsgerät ist redundant mit einem dritten Kommunikationsnetzanschluss eines ersten und zweiten Netzinfrastrukturgeräts verbunden. Das zweite Kommunikationsgerät ist redundant mit einem dritten Kommunikationsnetzanschluss eines dritten und vierten Netzinfrastrukturgeräts verbunden. Das erste und dritte Netzinfrastrukturgerät sowie das zweite und vierte Netzinfrastrukturgerät sind jeweils über ihren ersten und zweiten Kommunikationsnetzanschluss miteinander verbunden. Während das erste und zweite Kommunikationsgerät redundant zu sendende Datenrahmen durch einen ersten Indikator kennzeichnen, kennzeichnen das erste und dritte Netzinfrastrukturgerät sowie das zweite und vierte Netzinfrastrukturgerät redundant zu sendende Datenrahmen durch einen zweiten bzw. dritten Indikator, der sich vom ersten Indikator unterscheidet, und verwerfen am dritten Kommunikationsanschluss empfangene durch den zweiten bzw. dritten Indikator gekennzeichnete Datenrahmen.

## Beschreibung

Industrielle Automatisierungssysteme dienen zur Überwachung, Steuerung und Regelung von technischen Prozessen, insbesondere im Bereich Fertigungs-, Prozess- und Gebäudeautomatisierung oder Verkehrs- bzw. Transportsysteme, und ermöglichen einen Betrieb von Steuerungseinrichtungen, Sensoren, Maschinen, Transportmitteln und industriellen Anlagen, der möglichst selbständig und unabhängig von menschlichen Eingriffen erfolgen soll. Aufgrund einer ständig steigenden Bedeutung von Informationstechnik für Automatisierungssysteme, die zahlreiche vernetzte Steuerungs- bzw. Rechnereinheiten umfassen, gewinnen Verfahren zur zuverlässigen Bereitstellung von über ein Automatisierungssystem verteilten Funktionen für eine Bereitstellung von Überwachungs-, Steuerungs- und Regelungsfunktionen verstärkt an Bedeutung. Eine Übermittlung von Mess- oder Steuerungsinformationen für Überwachungs-, Steuerungs- und Regelungsfunktionen ist üblicherweise hochgradig zeitkritisch.

Unterbrechungen von Kommunikationsverbindungen zwischen Rechnereinheiten eines industriellen Automatisierungssystems oder Automatisierungsgeräten können zu einer unerwünschten oder unnötigen Wiederholung einer Übermittlung einer Dienstanforderung führen. Außerdem können nicht, unvollständig oder nicht rechtzeitig übermittelte Nachrichten einen Übergang oder Verbleib hinsichtlich eines sicheren Betriebszustands verhindern. Eine besondere Problematik resultiert in industriellen Automatisierungssystemen regelmäßig aus einem Meldungsverkehr mit verhältnismäßig vielen, aber relativ kurzen Nachrichten, wodurch obige Probleme verstärkt werden.

Um Ausfälle von Kommunikationsverbindungen oder -geräten kompensieren zu können, sind Kommunikationsprotokolle, wie Media Redundancy Protocol, High-availability Seamless Redundancy oder Parallel Redundancy Protocol, für hochverfügbare, redundant betreibbare industrielle Kommunikationsnetze entwickelt worden. Media Redundancy Protocol (MSR) ist im Standard IEC 62439 definiert und ermöglicht eine Kompensation einzelner Verbindungsausfälle in Netzen mit einfacher Ringtopologie bei stoßbehafteter redundanter Übertragung von Nachrichten. Entsprechend Media Redundancy Protocol ist einem Switch mit zwei Ports innerhalb der Ringtopologie ein Redundanz-Manager zugeordnet, der das Netz auf Verbindungsausfälle überwacht und ggf. eine Schaltmaßnahme für einen Ringschluss einleitet.

Stoßbehaftete Medienredundanzverfahren lassen sich grundsätzlich mit relativ geringem Aufwand realisieren. Nachteilig ist jedoch, dass einerseits Nachrichten im Fehlerfall verloren gehen können und andererseits während einer Rekonfiguration eines Kommunikationsnetzes zunächst ein Störungszustand vorliegt. Ein derartiger Störungszustand muss durch ein überlagertes Kommunikationsprotokoll, beispielsweise mittels TCP/IP auf Vermittlungs- bzw. Transportschichtebene, gesichert werden, um eine Unterbrechung einer Kommunikationsverbindung zu vermeiden.

High-availability Seamless Redundancy (HSR) und Parallel Redundancy Protocol (PRP) sind im Standard IEC 62439-3 definiert und ermöglichen eine stoßfreie redundante Übertragung von Nachrichten mit äußerst geringen Erholungszeiten. Entsprechend High-availability Seamless Redundancy und Parallel Redundancy Protocol wird jede Nachricht von einem sendenden Kommunikationsgerät dupliziert und auf zwei verschiedenen Wegen zu einem Empfänger geschickt. Durch ein empfängerseitiges Kommunikationsgerät werden Duplikate darstellende redundante Nachrichten aus einem empfangenen Datenstrom ausgefiltert.

In EP 2 634 973 B1 ist ein Kommunikationsgerät für ein redundant betreibbares industrielles Kommunikationsnetz beschreiben, das zumindest eine erste und eine zweite Sende- und Empfangseinheit umfasst, die jeweils eine Schnittstelle für eine Netzwerkverbindung des industriellen Kommunikationsnetzes aufweisen. Mit der ersten und zweiten Sende- und Empfangseinheit ist eine Signalverarbeitungseinheit verbunden. Über ein Koppelelement ist ein einfach angebundener Netzknoten mit der Signalverarbeitungseinheit verbunden. Die Signalverarbeitungseinheit ist über eine erste und zweite Schnittstelle mit dem Koppelelement verbunden. Dabei ist die erste Schnittstelle ausschließlich für eine Übermittlung durch die erste Empfangseinheit empfangener Datenpakete vorgesehen, während die zweite Schnittstelle ausschließlich für eine Übermittlung durch die zweite Empfangseinheit empfangener Datenpakete vorgesehen ist.

Aus EP 2 670 078 B1 ist ein Kommunikationsgerät für ein redundant betreibbares industrielles Kommunikationsnetz bekannt, das mehrere erste und zweite Sende- und Empfangseinheiten umfasst, die jeweils eine Schnittstelle für eine Netzverbindung des industriellen Kommunikationsnetzes aufweisen und jeweils einem von mehreren redundant betreibbaren Teilnetzen zugeordnet sind. Die ersten und zweiten Sende- und Empfangseinheiten sind über ein Koppelelement mit einer für alle redundant betreibbaren Teilnetze gemeinsamen Signalverarbeitungseinheit verbunden. Für jedes Paar von einer ersten Sende- und Empfangseinheit und einer dieser zugeordneten zweiten Sende- und Empfangseinheit zugeordneten Anschlüssen sowie einem der Signalverarbeitungseinheit zugeordneten Anschluss wird jeweils ein virtuelles lokales Netz eingerichtet. Die Signalverarbeitungseinheit leitet für sämtliche ersten und zweiten Sende- und Empfangseinheiten anhand einer Kennung des jeweiligen virtuellen lokalen Netzes zu sendende Nachrichten parallel an die jeweilige erste und zweite Sende- und Empfangseinheit weiter und detektiert empfangene redundante Nachrichten.

Im Standard IEC 62439-3 sind für das Parallel Redundancy Protocol (PRP) aufgrund verhältnismäßig langer Latenzlaufzeiten in Drahtlos-Kommunikationssystemen und eines dadurch bedingten nicht-deterministischen Übertragungsverhaltens bislang ausschließlich kabelgebundene Übertragungsstrecken vorgeschrieben. In "Towards a Reliable Parallel Redundant WLAN Black Channel", Markus Rentschler, Per Laukemann, IEEE 2012 wird eine Eignung von WLAN-Übertragungsstrecken in PRP-Kommunikationsnetzen untersucht. Mittels paralleler Anwendung unterschiedlicher Diversitätstechniken für beispielsweise Raum, Zeit und Frequenz können in WLAN-Kommunikationsnetzen Auswirkungen von stochastischem Kanalschwund hinreichend kompensiert werden.

Aus EP 2 712 124 B1 ist ein redundant betriebenes industrielles Kommunikationssystem mit redundant an ein industrielles Kommunikationsnetz angebundenen Kommunikationsgeräten bekannt, bei dem eine Nachrichtenübermittlung zumindest abschnittsweise kabellos erfolgt. Im industriellen Kommunikationsnetz ist eine Mehrzahl von Puffer-Speichereinheiten für an einem Netzknoten kabelgebunden empfangene und von diesem kabellos zu sendende Nachrichtenelemente vorgesehen. Bei Überschreiten einer maximalen Puffer-Größe wird ein ältestes in der jeweiligen Puffer-Speichereinheit befindliches Nachrichtenelement gelöscht. Bis zu einem Überschreiten der maximalen Puffer-Größe wird das älteste Nachrichtenelement als nächstes kabellos zu sendendes Nachrichtenelement ausgewählt.

In der älteren europäischen Patentanmeldung mit dem Anmeldeaktenkennzeichen 16157779.6 ist ein redundant betreibbares industrielles Kommunikationssystems beschrieben, bei dem ein erstes Kommunikationsgerät mit Redundanzfunktion über einen ersten und zweiten Kommunikationsnetzanschluss redundant an einen ersten Switch o.ä. angeschlossen ist. Entsprechend ist ein zweites Kommunikationsgerät mit Redundanzfunktion über einen ersten und zweiten Kommunikationsnetzanschluss redundant an einen zweiten Switch o.ä. angeschlossen ist. Vom ersten Kommunikationsnetzanschluss des ersten und des zweiten Kommunikationsgeräts an den jeweiligen Switch übermittelte Datenrahmen werden einem ersten virtuellen lokalen Netz zugeordnet, während vom zweiten Kommunikationsnetzanschluss des ersten und des zweiten Kommunikationsgeräts an den jeweiligen Switch übermittelte Datenrahmen einem zweiten virtuellen lokalen Netz zugeordnet werden. Dem ersten virtuellen lokalen Netz zugeordnete Datenrahmen werden mittels einer jeweiligen ersten Funk-Transceiver-Station über ein erstes Funknetz gesendet, während dem zweiten virtuellen lokalen Netz zugeordnete Datenrahmen mittels einer jeweiligen zweiten Funk-Transceiver-Station über ein zweites Funknetz gesendet werden.

Aus der älteren europäischen Patentanmeldung mit dem Anmeldeaktenkennzeichen 16167676.2 ist ein Funk-Kommunikationssystem für ein industrielles Automatisierungssystem bekannt, bei dem zumindest ein erstes und ein zweites Kommunikationsgerät redundant an ein industrielles Kommunikationsnetz angebunden sind. Das erste und das zweite Kommunikationsgerät sind jeweils über ihren ersten und über ihren Kommunikationsnetzanschluss mittel- oder unmittelbar mit einer jeweiligen ersten und mit einer jeweiligen zweiten Funk-Teilnehmer- bzw. Funk-Basisstation verbunden. Die Funk-Teilnehmerstationen tauschen untereinander Meldungen über verfügbare Funk-Basisstationen aus und koordinieren mittels der Meldungen, welche der Funk-Teilnehmerstationen momentan bzw. innerhalb eines definierbaren Zeitraums eine exklusive Berechtigung für eine Funkverbindung zu einer ausgewählten Funk-Basisstation hat.

Der Standard IEC 62439-3 sieht für das Parallel Redundancy Protocol (PRP) grundsätzlich nur 2 voneinander unabhängige redundante Kommunikationspfade vor. Für einige Anwendungsfälle ist jedoch eine Beschränkung auf lediglich 2 redundante Kommunikationspfade nicht ausreichend. Ein Beispiel für solche Anwendungsfälle sind Kommunikationssysteme mit Funk-Übertragungsstrecken, insbesondere bei denen sich in Verbindung stehende Funk-Stationen mit hoher Geschwindigkeit relativ zueinander bewegen und Roaming-Probleme zu berücksichtigen sind.

Der vorliegenden Erfindung liegt die Aufgabe zugrunde, ein Kommunikationssystem für ein industrielles Automatisierungssystem zu schaffen, das auch bei Verwendung kritischer Übertragungsstrecken eine hohe Ausfallsicherheit bietet, und ein Verfahren zu dessen Betrieb anzugeben.

Diese Aufgabe wird erfindungsgemäß durch ein Kommunikationssystem mit den in Anspruch 1 angegebenen Merkmalen und durch ein Verfahren mit den in Anspruch 9 angegebenen Merkmalen gelöst. Vorteilhafte Weiterbildungen der vorliegenden Erfindung sind in den abhängigen Ansprüchen angegeben.

Das erfindungsgemäße redundant betreibbare Kommunikationssystem für ein industrielles Automatisierungssystem umfasst zumindest ein erstes und zweites Kommunikationsgerät und zumindest 4 Netzinfrastrukturgeräte. Das erste und zweite Kommunikationsgerät umfassen jeweils zumindest einen ersten und zweiten Kommunikationsnetzanschluss und eine mit dem ersten und zweiten Kommunikationsnetzanschluss verbundene Signalverarbeitungseinheit. Die Signalverarbeitungseinheit weist eine Multiplexereinheit zur parallelen Weiterleitung zu sendender Datenrahmen an beide Kommunikationsnetzanschlüsse und eine Redundanzbehandlungseinheit auf, die für eine Detektion empfangener redundanter Datenrahmen und für ein Verwerfen von Datenrahmen-Duplikaten ausgestaltet und eingerichtet ist. Die 4 Netzinfrastrukturgeräte umfassen jeweils einen ersten, zweiten und dritten Kommunikationsnetzanschluss und eine mit dem ersten bis dritten Kommunikationsnetzanschluss verbundene Signalverarbeitungseinheit. Die Signalverarbeitungseinheit weist eine Multiplexereinheit zur parallelen Weiterleitung am dritten Kommunikationsnetzanschluss empfangener Datenrahmen an den ersten und zweiten Kommunikationsnetzanschluss und eine Redundanzbehandlungseinheit auf, die für eine Detektion am ersten und zweiten Kommunikationsnetzanschluss empfangener redundanter Datenrahmen und für ein Verwerfen von Datenrahmen-Duplikaten vor einer Weiterleitung an den dritten Kommunikationsnetzanschluss ausgestaltet und eingerichtet ist.

Das erste Kommunikationsgerät ist erfindungsgemäß redundant mit dem dritten Kommunikationsnetzanschluss eines ersten und zweiten Netzinfrastrukturgeräts verbunden, während das zweite Kommunikationsgerät redundant mit dem dritten Kommunikationsnetzanschluss eines dritten und vierten Netzinfrastrukturgeräts verbunden ist. Das erste und dritte Netzinfrastrukturgerät sind jeweils über ihren ersten und zweiten Kommunikationsnetzanschluss miteinander verbunden, während das zweite und vierte Netzinfrastrukturgerät jeweils über ihren ersten und zweiten Kommunikationsnetzanschluss miteinander verbunden sind.

Erfindungsgemäß sind das erste und zweite Kommunikationsgerät dafür ausgestaltet und eingerichtet, redundant zu sendende Datenrahmen durch einen ersten Indikator zu kennzeichnen, während das erste und dritte Netzinfrastrukturgerät jeweils dafür ausgestaltet und eingerichtet sind, redundant zu sendende Datenrahmen durch einen zweiten Indikator zu kennzeichnen, der sich vom ersten Indikator unterscheidet, und am dritten Kommunikationsanschluss empfangene durch den zweiten Indikator gekennzeichnete Datenrahmen zu verwerfen. Darüber hinaus sind das zweite und vierte Netzinfrastrukturgerät dafür ausgestaltet und eingerichtet, redundant zu sendende Datenrahmen durch einen dritten Indikator zu kennzeichnen, der sich vom ersten Indikator unterscheidet, und am dritten Kommunikationsanschluss empfangene durch den dritten Indikator gekennzeichnete Datenrahmen zu verwerfen. Auf diese Weise können für eine stoßfreie Datenübermittlung 4 redundante Übertragungsstrecken genutzt werden. Basierend auf der vorliegenden Erfindung können Netzinfrastrukturgeräte zur Erhöhung einer Anzahl nutzbarer Übertragungsstrecken sogar noch weiter kaskadiert werden.

Entsprechend einer bevorzugten Ausgestaltung der vorliegenden Erfindung sind das erste und dritte Netzinfrastrukturgerät drahtlos miteinander verbunden, während das zweite und vierte Netzinfrastrukturgerät drahtlos miteinander verbunden sind. Dabei können das erste bis vierte Netzinfrastrukturgerät jeweils an zwei Funk-Transceiver-Stationen angeschlossen sein.

Vorzugsweise sind das erste bis vierte Netzinfrastrukturgerät RedBoxen entsprechend IEC 62439-3. Entsprechend einer weiteren vorteilhaften Ausgestaltung der vorliegenden Erfindung sind der erste bis dritte Indikator jeweils ein PRPsuffix entsprechend IEC 62439-3, das in einen Redundancy Control Trailer eines redundant zu sendende Datenrahmens eingefügt ist. In diesem Fall weist der erste Indikator als Wert vorzugsweise 0x88FB auf. Vorteilhafterweise sind der zweite und dritte Indikator identisch.

Entsprechend einer weiteren Ausgestaltung der vorliegenden Erfindung ist das erste Kommunikationsgerät über seinen ersten und zweiten Kommunikationsnetzanschluss redundant mit dem dritten Kommunikationsnetzanschluss des ersten und zweiten Netzinfrastrukturgeräts verbunden, während das zweite Kommunikationsgerät über seinen ersten und zweiten Kommunikationsnetzanschluss redundant mit dem dritten Kommunikationsnetzanschluss des dritten und vierten Netzinfrastrukturgeräts verbunden ist.

Entsprechend dem erfindungsgemäßen Verfahren zum redundanten Betrieb eines Kommunikationssystems gemäß vorangehenden Ausführungen kennzeichnen das erste und zweite Kommunikationsgerät redundant zu sendende Datenrahmen durch einen ersten Indikator. Das erste und dritte Netzinfrastrukturgerät redundant kennzeichnen zu sendende Datenrahmen durch einen zweiten Indikator, der sich vom ersten Indikator unterscheidet, und verwerfen am dritten Kommunikationsanschluss empfangene durch den zweiten Indikator gekennzeichnete Datenrahmen. Das zweite und vierte Netzinfrastrukturgerät kennzeichnen redundant zu sendende Datenrahmen durch einen dritten Indikator, der sich vom ersten Indikator unterscheidet, und verwerfen am dritten Kommunikationsanschluss empfangene durch den dritten Indikator gekennzeichnete Datenrahmen. Vorzugsweise sind der zweite und dritte Indikator identisch. Entsprechend einer bevorzugten Ausgestaltung des erfindungsgemäßen Verfahrens sind der erste bis dritte Indikator jeweils ein PRPsuffix entsprechend IEC 62439-3, das in einen Redundancy Control Trailer eines redundant zu sendende Datenrahmens eingefügt ist.

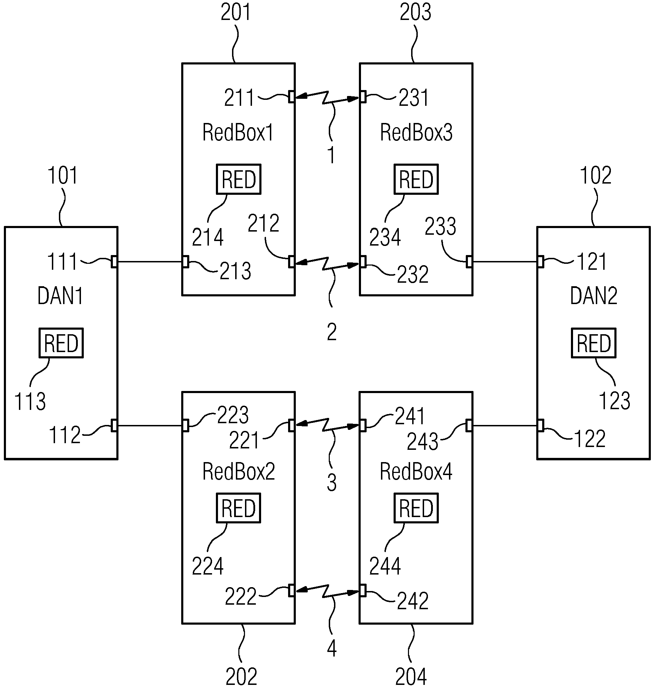

Die vorliegende Erfindung wird nachfolgend an einem Ausführungsbeispiel anhand der Zeichnung näher erläutert. Es zeigt die
- Figur: ein redundant betreibbares Kommunikationssystem für ein industrielles Automatisierungssystem, wobei das Kommunikationssystem 2 Kommunikationsgeräte und 4 Netzinfrastrukturgeräte umfasst.

Das in der Figur dargestellte Kommunikationssystem umfasst ein erstes 101 und zweites Kommunikationsgerät 102 sowie 4 PRP-RedBoxen 201-204 entsprechend IEC 62439-3 als Netzinfrastrukturgeräten. Die beiden Kommunikationsgeräte 101, 102 weisen jeweils zumindest einen ersten 111, 121 und zweiten Kommunikationsnetzanschluss 112, 122 und eine mit dem jeweiligen ersten und zweiten Kommunikationsnetzanschluss 111-112, 121-122 verbundene Signalverarbeitungseinheit 113, 123 auf. Die Signalverarbeitungseinheiten 113, 123 können beispielsweise mittels eines FPGA realisiert sein und umfassen jeweils eine Multiplexereinheit zur parallelen Weiterleitung zu sendender Datenrahmen an beide Kommunikationsnetzanschlüsse 111-112, 121-122 und eine Redundanzbehandlungseinheit, die für eine Detektion empfangener redundanter Datenrahmen und für ein Verwerfen von Datenrahmen-Duplikaten entsprechend IEC 62439-3 ausgestaltet und eingerichtet ist.

Grundsätzlich können auch das erste 101 und zweite Kommunikationsgerät 102 als PRP-RedBoxen entsprechend IEC 62439-3 ausgestaltet sein und einen Interlink-Port als dritten Kommunikationsnetzanschluss umfassen. Beispielsweise kann an den Interlink-Port des ersten Kommunikationsgeräts 101 auf Leitsystemebene ein SCADA-System (Supervisory Control and Data Acquisition) angeschlossen sein, während an den Interlink-Port des zweiten Kommunikationsgeräts auf Feldebene ein Sensor- bzw. Aktorsystem eines industriellen Automatisierungssystems angeschlossen sein kann. Ein solches Sensor- bzw. Aktorsystem kann beispielsweise ein Fertigungsroboter, ein Antrieb für ein Fördersystem oder eine Bedien- und Beobachtungsstation an einer Fertigungslinie sein. Alternativ dazu können das erste 101 und zweite Kommunikationsgerät 102 auch als feste bzw. bewegliche Stationen einem Kommunikationssystem eines Hochgeschwindigkeitszugs oder eines sonstigen Transportsystems zugeordnet sein.

Die 4 PRP-RedBoxen 201-204 umfassen jeweils einen ersten 211, 221, 231, 241, zweiten 212, 222, 232, 242 und dritten Kommunikationsnetzanschluss 213, 223, 233, 243 sowie eine mit dem jeweiligen ersten bis dritten Kommunikationsnetzanschluss 211-213, 221-223, 231-233, 241-243 verbundene Signalverarbeitungseinheit 214, 224, 234, 244. Die Signalverarbeitungseinheiten 214, 224, 234, 244 weisen jeweils eine Multiplexereinheit zur parallelen Weiterleitung am dritten Kommunikationsnetzanschluss 213, 223, 233, 243 empfangener Datenrahmen an den ersten 211, 221, 231, 241 und zweiten Kommunikationsnetzanschluss 212, 222, 232, 242 und eine Redundanzbehandlungseinheit auf, die für eine Detektion am ersten 211, 221, 231, 241 und zweiten Kommunikationsnetzanschluss 212, 222, 232, 242 empfangener redundanter Datenrahmen und für ein Verwerfen von Datenrahmen-Duplikaten vor einer Weiterleitung an den dritten Kommunikationsnetzanschluss 213, 223, 233, 243 entsprechend IEC 62439-3 ausgestaltet und eingerichtet ist.

Zueinander redundante Datenrahmen werden entsprechend IEC 62439-3, Edition 2.0, Kapitel 4.1 durch eine einheitliche Sequenznummer gekennzeichnet, die durch die jeweilige Signalverarbeitungseinheit 113, 123, 214, 224, 234, 244 an redundant zu übermittelnde Datenrahmen vergeben wird. Des weiteren ist den Signalverarbeitungseinheiten 113, 123, 214, 224, 234, 244 vorzugsweise jeweils eine Speichereinheit zugeordnet, die Sequenznummern bereits fehlerfrei empfangener Datenrahmen speichert. Bei Empfang eines neuen Datenrahmens führt die jeweilige Redundanzbehandlungseinheit eine Überprüfung auf Übereinstimmung mit einer bereits gespeicherten Sequenznummer durch. Auch wenn redundant zu übermittelnde Datenrahmen werden im vorliegenden Ausführungsbeispiel entsprechend Parallel Redundancy Protocol übertragen werden, gelten nachfolgende Ausführungen analog auch für eine Übertragung entsprechend High-availability Seamless Redundancy Protocol, das in IEC 62439-3, Edition 2.0, Kapitel 5 beschrieben ist.

Entsprechend der Figur ist das erste Kommunikationsgerät 101 redundant mit dem dritten Kommunikationsnetzanschluss 213, 223 einer ersten 201 und zweiten PRP-RedBox 202 verbunden, während das zweite Kommunikationsgerät 102 redundant mit dem dritten Kommunikationsnetzanschluss 233, 243 einer dritten 203 und vierten PRP-RedBox 204 verbunden ist. Darüber hinaus sind die erste und dritte PRP-RedBox 201, 203 jeweils über ihren ersten 211, 231 und zweiten Kommunikationsnetzanschluss 212, 232 miteinander verbunden. In entsprechender Weise sind auch die zweite 202 und vierte PRP-RedBox 204 jeweils über ihren ersten 221, 241 und zweiten Kommunikationsnetzanschluss 222, 242 miteinander verbunden. Somit stehen für eine zum Parallel Redundancy Protocol konforme Datenübermittlung 4 disjunkte Kommunikationsnetzpfade 1-4 zu Verfügung.

Im vorliegenden Ausführungsbeispiel sind die erste 201 und dritte PRP-RedBox 203 bzw. die zweite 202 und vierte PRP-RedBox 204 drahtlos miteinander verbunden. Hierzu kann an jeden ersten 211, 221, 231, 241 und zweiten Kommunikationsnetzanschluss 212, 222, 232, 242 jeweils eine Funk-Transceiver-Station angeschlossen werden. Die Funk-Transceiver-Stationen können beispielsweise WLAN-Stationen sein, die wahlweise eine Rolle als WLAN-Access-Point oder als WLAN-Client wahrnehmen können. Anstelle von WLAN-Stationen können grundsätzlich auch Funk-Transceiver-Stationen für ein WiMAX-, ein UMTS-, ein LTE-Mobilfunknetz oder ein sonstiges Mobilfunknetz verwendet werden. Nachfolgende Ausführungen gelten hierfür analog.

Das erste 101 und zweite Kommunikationsgerät 102 kennzeichnen redundant zu sendende Datenrahmen durch einen ersten Indikator. Die erste und dritte PRP-RedBox 201, 203 kennzeichnen redundant zu sendende Datenrahmen dagegen durch einen zweiten Indikator, der sich vom ersten Indikator unterscheidet, und verwerfen am dritten Kommunikationsanschluss 213, 223 empfangene durch den zweiten Indikator gekennzeichnete Datenrahmen. In entsprechender Weise kennzeichnen die zweite 202 und vierte PRP-RedBox 204 redundant zu sendende Datenrahmen durch einen dritten Indikator, der sich ebenfalls vom ersten Indikator unterscheidet, und verwerfen am dritten Kommunikationsanschluss empfangene durch den dritten Indikator gekennzeichnete Datenrahmen. Dabei sind der zweite und dritte Indikator vorzugsweise identisch.

Der erste bis dritte Indikator sind jeweils ein PRPsuffix entsprechend IEC 62439-3, Edition 2.0, Kapitel 4.1.10.2.2, das in einen Redundancy Control Trailer eines redundant zu sendende Datenrahmens eingefügt ist. Eine detaillierte Beschreibung des Redundancy Control Trailers ist IEC 62439-3, Edition 2.0, Kapitel 4.2.7.3 zu entnehmen. Im vorliegenden Ausführungsbeispiel wird als Wert für den ersten Indikator 0x88FB gewählt, während für den zweiten bzw. dritten Indikator anwendungs- bzw. benutzerindividuelle Werte gewählt werden. Das vorliegende Ausführungsbeispiel bietet somit den Vorteil, dass durch Modifikation von PRP-Protokollinformationen mehrere PRP-Instanzen unterscheidbar sind und 4 oder mehre redundante PRP-Übertragungswege realisiert werden können.

## Patentansprüche

1. Redundant betreibbares Kommunikationssystem für ein industrielles Automatisierungssystem mit
- zumindest einem ersten (101) und zweiten Kommunikationsgerät (102) mit jeweils
- zumindest einem ersten (111, 121) und zweiten Kommunikationsnetzanschluss (112, 122),
- einer mit dem ersten und zweiten Kommunikationsnetzanschluss verbundenen Signalverarbeitungseinheit (113, 123), die eine Multiplexereinheit zur parallelen Weiterleitung zu sendender Datenrahmen an beide Kommunikationsnetzanschlüsse und eine Redundanzbehandlungseinheit aufweist, die für eine Detektion empfangener redundanter Datenrahmen und für ein Verwerfen von Datenrahmen-Duplikaten ausgestaltet und eingerichtet ist,
- zumindest 4 Netzinfrastrukturgeräten (201-204) mit jeweils
- einem ersten (211, 221, 231, 241), zweiten (212, 222, 232, 242) und dritten Kommunikationsnetzanschluss (213, 223, 233, 243),
- einer mit dem ersten bis dritten Kommunikationsnetzanschluss verbundenen Signalverarbeitungseinheit (214, 224, 234, 244), die eine Multiplexereinheit zur parallelen Weiterleitung am dritten Kommunikationsnetzanschluss empfangener Datenrahmen an den ersten und zweiten Kommunikationsnetzanschluss und eine Redundanzbehandlungseinheit aufweist, die für eine Detektion am ersten und zweiten Kommunikationsnetzanschluss empfangener redundanter Datenrahmen und für ein Verwerfen von Datenrahmen-Duplikaten vor einer Weiterleitung an den dritten Kommunikationsnetzanschluss ausgestaltet und eingerichtet ist,
**dadurch gekennzeichnet, dass**
- das erste Kommunikationsgerät (101) redundant mit dem dritten Kommunikationsnetzanschluss eines ersten (201) und zweiten Netzinfrastrukturgeräts (202) verbunden ist,
- das zweite Kommunikationsgerät (102) redundant mit dem dritten Kommunikationsnetzanschluss eines dritten (203) und vierten Netzinfrastrukturgeräts (204) verbunden ist,
- das erste und dritte Netzinfrastrukturgerät jeweils über ihren ersten und zweiten Kommunikationsnetzanschluss miteinander verbunden sind,
- das zweite und vierte Netzinfrastrukturgerät jeweils über ihren ersten und zweiten Kommunikationsnetzanschluss miteinander verbunden sind,
- das erste und zweite Kommunikationsgerät dafür ausgestaltet und eingerichtet sind, redundant zu sendende Datenrahmen durch einen ersten Indikator zu kennzeichnen,
- das erste und dritte Netzinfrastrukturgerät jeweils dafür ausgestaltet und eingerichtet sind, redundant zu sendende Datenrahmen durch einen zweiten Indikator zu kennzeichnen, der sich vom ersten Indikator unterscheidet, und am dritten Kommunikationsanschluss empfangene durch den zweiten Indikator gekennzeichnete Datenrahmen zu verwerfen,
- das zweite und vierte Netzinfrastrukturgerät dafür ausgestaltet und eingerichtet sind, redundant zu sendende Datenrahmen durch einen dritten Indikator zu kennzeichnen, der sich vom ersten Indikator unterscheidet, und am dritten Kommunikationsanschluss empfangene durch den dritten Indikator gekennzeichnete Datenrahmen zu verwerfen.

2. Kommunikationssystem nach Anspruch 1,
bei dem das erste und dritte Netzinfrastrukturgerät drahtlos miteinander verbunden sind und bei dem das zweite und vierte Netzinfrastrukturgerät drahtlos miteinander verbunden sind.

3. Kommunikationssystem nach Anspruch 2,
bei dem das erste bis vierte Netzinfrastrukturgerät jeweils an zwei Funk-Transceiver-Stationen angeschlossen sind.

4. Kommunikationssystem nach einem der Ansprüche 1 bis 3,
bei dem das erste bis vierte Netzinfrastrukturgerät RedBoxen entsprechend IEC 62439-3 sind.

5. Kommunikationssystem nach Anspruch 4,
bei dem der erste bis dritte Indikator jeweils ein PRPsuffix entsprechend IEC 62439-3 sind, das in einen Redundancy Control Trailer eines redundant zu sendende Datenrahmens eingefügt ist.

6. Kommunikationssystem nach Anspruch 5,
bei dem der erste Indikator als Wert 0x88FB aufweist.

7. Kommunikationssystem nach einem der Ansprüche 1 bis 6,
bei dem der zweite und dritte Indikator identisch sind.

8. Kommunikationssystem nach einem der Ansprüche 1 bis 7,
bei dem das erste Kommunikationsgerät über seinen ersten und zweiten Kommunikationsnetzanschluss redundant mit dem dritten Kommunikationsnetzanschluss des ersten und zweiten Netzinfrastrukturgeräts verbunden ist und bei dem das zweite Kommunikationsgerät über seinen ersten und zweiten Kommunikationsnetzanschluss redundant mit dem dritten Kommunikationsnetzanschluss des dritten und vierten Netzinfrastrukturgeräts verbunden ist.

9. Verfahren zum redundanten Betrieb eines Kommunikationssystems für ein industrielles Automatisierungssystem, bei dem
- das industrielle Kommunikationssystem zumindest ein erstes (101) und zweites Kommunikationsgerät (102) mit jeweils
- zumindest einem ersten (111, 121) und zweiten Kommunikationsnetzanschluss (112, 122) und
- einer mit dem ersten und zweiten Kommunikationsnetzanschluss verbundenen Signalverarbeitungseinheit (113, 123) umfasst, die eine Multiplexereinheit zur parallelen Weiterleitung zu sendender Datenrahmen an beide Kommunikationsnetzanschlüsse und eine Redundanzbehandlungseinheit aufweist, die für eine Detektion empfangener redundanter Datenrahmen und für ein Verwerfen von Datenrahmen-Duplikaten ausgestaltet und eingerichtet ist,
- das industrielle Kommunikationssystem zumindest 4 Netzinfrastrukturgeräte (201-204) mit jeweils
- einem ersten (211, 221, 231, 241), zweiten (212, 222, 232, 242) und dritten Kommunikationsnetzanschluss (213, 223, 233, 243) und
- einer mit dem ersten bis dritten Kommunikationsnetzanschluss verbundenen Signalverarbeitungseinheit (214, 224, 234, 244) umfasst, die eine Multiplexereinheit zur parallelen Weiterleitung am dritten Kommunikationsnetzanschluss empfangener Datenrahmen an den ersten und zweiten Kommunikationsnetzanschluss und eine Redundanzbehandlungseinheit aufweist, die für eine Detektion am ersten und zweiten Kommunikationsnetzanschluss empfangener redundanter Datenrahmen (11, 12) und für ein Verwerfen von Datenrahmen-Duplikaten vor einer Weiterleitung an den dritten Kommunikationsnetzanschluss ausgestaltet und eingerichtet ist,
**dadurch gekennzeichnet, dass**
- das erste Kommunikationsgerät (101) redundant mit dem dritten Kommunikationsnetzanschluss eines ersten (201) und zweiten Netzinfrastrukturgeräts (202) verbunden ist,
- das zweite Kommunikationsgerät (102) redundant mit dem dritten Kommunikationsnetzanschluss eines dritten (203) und vierten Netzinfrastrukturgeräts (204) verbunden ist,
- das erste und dritte Netzinfrastrukturgerät jeweils über ihren ersten und zweiten Kommunikationsnetzanschluss miteinander verbunden sind,
- das zweite und vierte Netzinfrastrukturgerät jeweils über ihren ersten und zweiten Kommunikationsnetzanschluss miteinander verbunden sind,
- das erste und zweite Kommunikationsgerät redundant zu sendende Datenrahmen durch einen ersten Indikator kennzeichnen,
- das erste und dritte Netzinfrastrukturgerät redundant zu sendende Datenrahmen durch einen zweiten Indikator kennzeichnen, der sich vom ersten Indikator unterscheidet, und am dritten Kommunikationsanschluss empfangene durch den zweiten Indikator gekennzeichnete Datenrahmen verwerfen,
- das zweite und vierte Netzinfrastrukturgerät redundant zu sendende Datenrahmen durch einen dritten Indikator kennzeichnen, der sich vom ersten Indikator unterscheidet, und am dritten Kommunikationsanschluss empfangene durch den dritten Indikator gekennzeichnete Datenrahmen verwerfen.
